# EUROPEAN PATENT SPECIFICATION

(11) **EP 4 384 685 B1**
(45) Date of publication and mention of the grant of the patent: **17.09.2025**
(21) Application number: 22765460.5
(22) Date of filing: 11.08.2022
(51) Int. Cl.: E21B 19/15, B65G 1/14

(54) **A TRANSPORTATION CRADLE FOR TUBULAR GOODS**
TRANSPORTWIEGE FÜR RÖHRENFÖRMIGE GÜTER
BERCEAU DE TRANSPORT POUR ARTICLES TUBULAIRES

(30) Priority: 11.08.2021 GB 202111551
(43) Date of publication of application: 19.06.2024
(73) Proprietor: ENELIFT LTD, Aberdeen AB15 4DT (GB)
(72) Inventor: BREBNER, Paul, 6700 Esbjerg (DK)
(74) Representative: ip21 Ltd
(86) International application number: PCT/EP2022/072609
(87) International publication number: WO 2023/017134

(56) References cited:
- WO-A1-2019/081604
- WO-A2-2011/018614
- GB-A- 2 294 448
- US-A1- 2003 205 907

## Description

### Field of the Invention

The invention relates to a tubular transportation cradle with interlocking profile crossbeams and having integrated lifting slings, utilized to move tubulars, pipe assemblies and downhole tools between onshore and offshore locations: typically, but not exclusively, within the oil and gas and renewable industries. The transportation cradle particularly enables pipe strings comprising a plurality of connected pipe sections to be transported and stored without the need to separate pipe sections from each other. The invention also allows other objects, such as wind turbine towers, to be more readily relocated.

### Background to the Invention

Many industries utilise a string formed of individual tubular units, such as open ended hollow cylindrical pipes to transport fluids or other materials. For example, the oil and gas industry requires, at the drill site, large numbers of tubular pipes. These pipes are used in the drilling process, when driving a drill bit, and for directing oil and gas that is extracted. The pipes further act to protect piping cables that are fed through the pipes to maintain the drill bit function. Pipes are commonly formed of steel, and require specialist equipment for moving and storage. Similarly, the water industry also utilises large numbers of pipes in the construction of a water supply system. The description below is made with reference to the oil and gas industry, although it will be recognised that the invention is applicable in other industries.

In order to transport pipes between locations, it is known to use cradles formed of a plurality of crossbeams. The crossbeams are deployed one above another, with the pipes sandwiched therebetween. In order to prevent the pipes from falling out of the cradle, and to maintain the crossbeams in their relative positions, side supports can be secured to each end of the crossbeams: the side supports being themselves supported by a locking means. One such arrangement is exemplified in WO 2019/081604 A1.

Such arrangements have the disadvantage however that where pipes of different diameters need to be transported these cannot all be supported in a single cradle and therefore multiple cradles need to be used. Moreover, when dismantled, a cradle requires space for the component parts to be stored in a safe manner: something which is not always possible as often space around a drilling area is at a premium. It would be advantageous therefore if a single cradle were able to be utilised to support and move pipes of different diameter, within the same load. Moreover, it would be also advantageous for crossbeams to be joined horizontally either physically or by proximity, to increase the width of a cradle. This allows cradles having few pipes to be moved as one load rather than separately.

It is to these problems, that the invention attempts to offer a solution.

### Summary of the Invention

According to a first aspect of the invention there is provided a cradle adapted to carry tubular goods of different diameter simultaneously, the cradle comprising a plurality of parallel deployed crossbeams, each crossbeam having a profiled end comprising a sling-receiving section to receive a sling, the sling-receiving section including a sling retention means to retain the sling within the sling-receiving section, each crossbeam having one or more recesses along one or both, and preferably both, of an upper surface and a lower surface of the crossbeam to receive and support a pipe;
securing means to secure a removable insert to an upper or lower surface, the insert having one or more recesses to receive and support a pipe, enabling a cradle to be adapted to support pipes of different diameter, a sling secured to each end of the lowermost crossbeam of the cradle.

Preferably, the crossbeams are held in alignment by a clamp bolt passing through each crossbeam and secured to the lowermost crossbeam. Further preferably, the cradle comprises two or more clamp bolts. The or each clamp bolt is optionally secured to the lowermost crossbeam by a threaded connection which is further optionally formed of a hard material such as bronze.

The uppermost crossbeam preferably includes a channel along the upper surface to retain a clamp bolt when not in use.

A crossbeam is preferably formed of one or more of extruded aluminium, composite, carbon fibre or elastomer and is further preferably, a fibre formed of a High or Ultra High Modulus polyethylene fibre (High modulus polyethylene (HMPE) or Ultra-high Molecular weight polyethylene (UHMWPE). A crossbeam is alternatively further preferably formed of aluminium.

Preferably the sling comprises a plurality of strands to reduce the risk of complete failure of a sling.

Optionally, the sling is in the form of a loop.

Preferably, a slot includes a circular aperture to receive a sling.

Optionally the restraining means comprises a narrow aperture linking the interior of the slot to the exterior of the cradle to restrict the chance for a sling to inadvertently come out of the slot.

Preferably, a removable insert has an upper and a lower surface, the upper surface including a recess to receive tubular goods such as a pipe. Further preferably, the upper surface of an insert is formed of a resilient material such as a rubber. Yet further preferably, the insert is formed of a resilient material.

An insert optionally has a plurality of recesses in the upper surface of the insert which further preferably are of different sizes to accommodate tubular goods of different diameters.

According to a second aspect, which is not part of the claimed invention, there is provided a crossbeam, the crossbeam having a profiled end comprising a sling-receiving section to receive a sling, the sling-receiving section including a sling retention means to retain the sling within the sling-receiving section, each crossbeam having one or more recesses along one or both, and preferably both, of an upper surface and a lower surface of the crossbeam to receive and support a pipe enabling a cradle to be adapted to support pipes of different diameter.

### Brief Description of the Drawings

The invention is now described with reference to the accompanying drawings which show by way of example only, several embodiments of transportation cradles. In the drawings:
Figures 1 illustrate a side view and a perspective view prior art transportation frame;
Figures 2 illustrate prior art pipe bundling methods;
Figures 3, 4, 5 illustrate a first embodiment of the present invention;
Figure 6 illustrate a perspective view of an embodiment of transport cradle during an unloading phase;

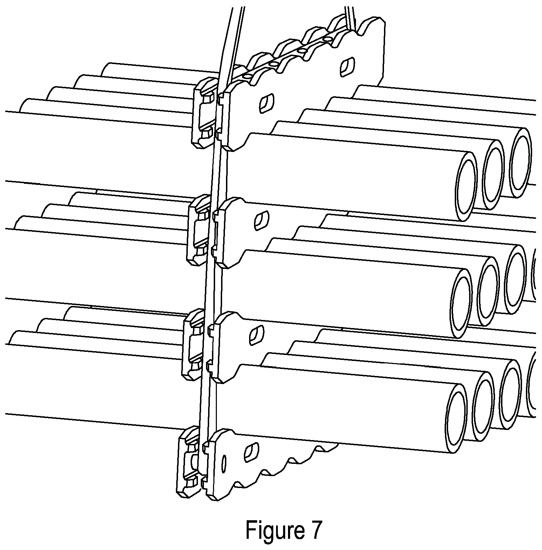

Figure 7 is a further perspective view of the embodiment of Figure 6;

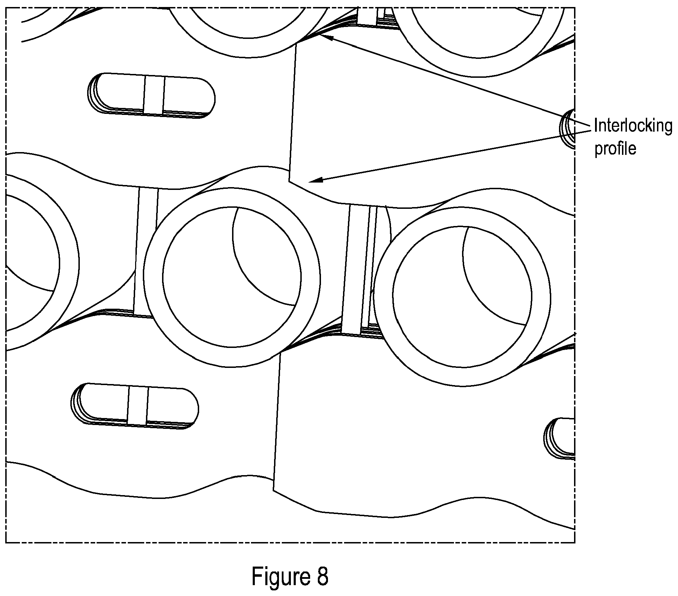

Figure 8 is a close-up view of the first embodiment of Figure 3;

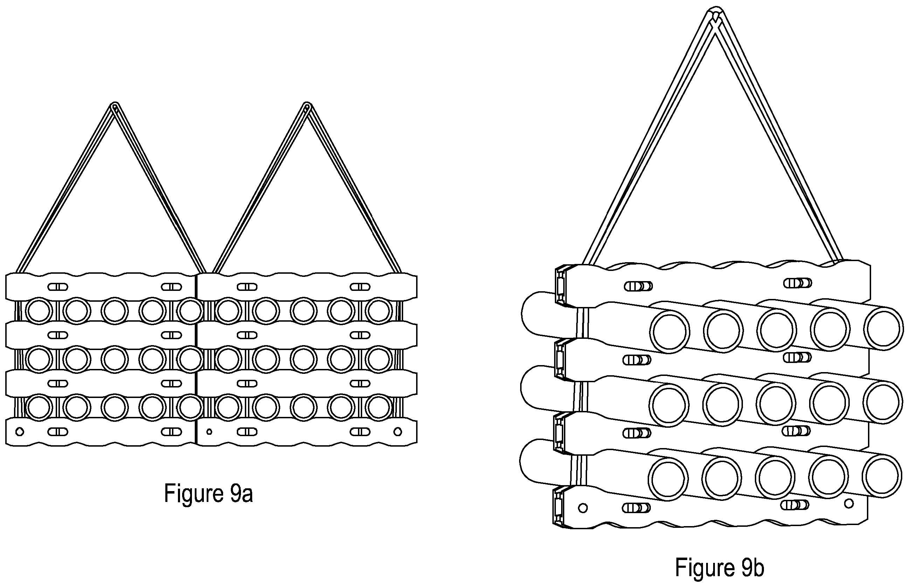

Figures 9a, 9b illustrate further views of the invention;

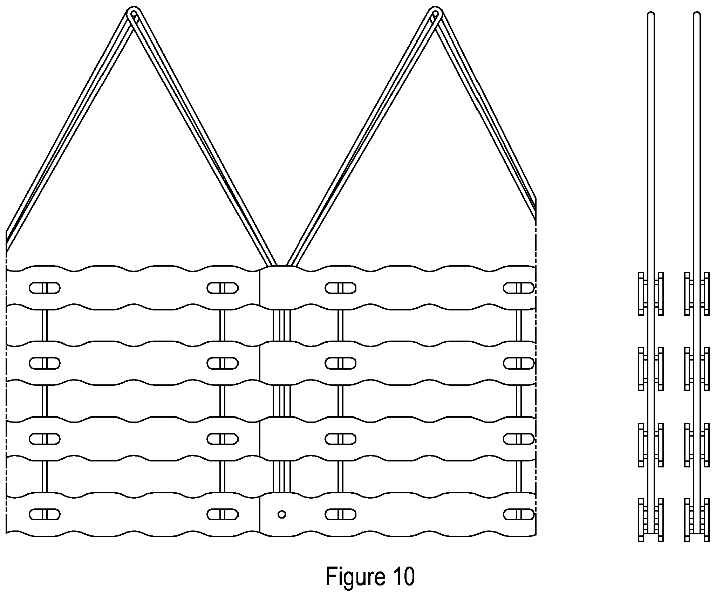

Figures 10 illustrate further views of the embodiment of Figure 3;
Figure 11a - 11d illustrate composite inserts;
Figure 12a - 12d illustrate further embodiments of composite inserts;
Figure 13 illustrates a cradle system loaded with various tool diameters;

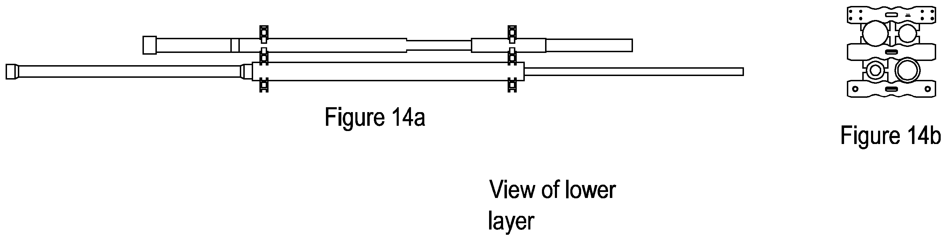

Figures 14a, 14b are side and end views of the loaded cradle of Figure 13;
Figure 15 illustrates the system loaded with a single tool;
Figure 16 is a perspective view of the loaded system of Figure 15;
Figure 17 is a perspective view of a crossbeam adapted to receive a single insert;
Figures 18a - 18c are, respectively, front, top, and end views of the crossbeam of Figure 17;
Figure 19 is a perspective view of a crossbeam adapted to receive a plurality of inserts;
Figures 20a - 20c are respectively front, top, and end views of the crossbeam of Figure 19;
Figure 21 is a perspective view of a further embodiment of crossbeam adapted to receive a plurality of inserts;
Figures 22a - 22c are respectively front, top, and end views of the crossbeam of Figure 21;
Figures 23a, 23b are exploded perspective views of the embodiment of crossbeam of Figure 21;
Figures 24a, 24b are partial cutaway view of a crossbeam including an insert;
Figures 25a - 25c are perspective views of the crossbeam of Figure 19 including an insert.

### Detailed Description of the Invention

There is a requirement in the oil and gas industry, amongst others, to safely move pipe sections, pipe strings, assemblies and downhole tools consisting of two or more pipe sections, between offshore and onshore locations, while utilizing as minimal amount of deck space as possible.

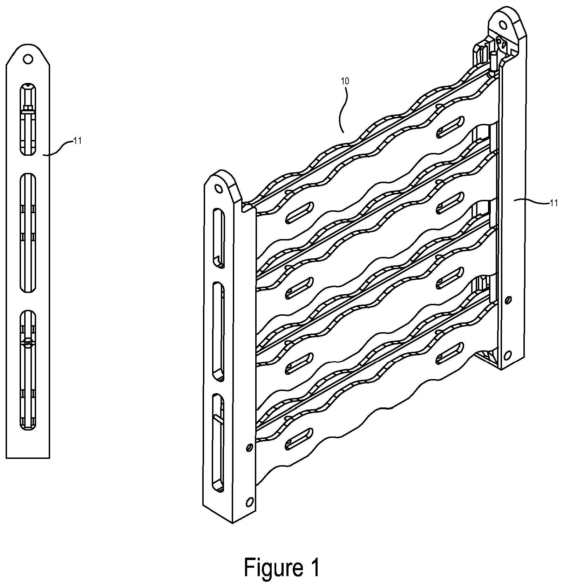

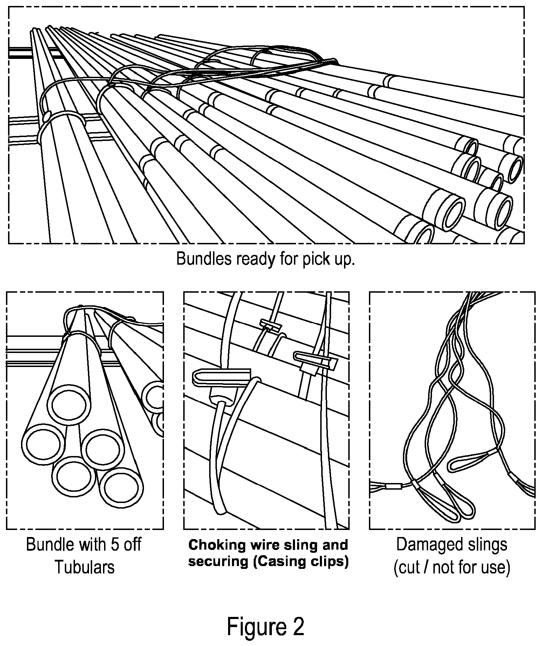

For example, when constructing or decommissioning a well or when carrying out repairs, a number of pipes are installed or removed from the well. The storage and transportation of the pipes to/from the rig site is usually handled using a tubular transportation frame 10 (Figure 1). Alternatively, pipe bundling methods (Figure 2) are typically used where the pipe sections are brought together in a bundle and wire rope slings passed about the bundle at various positions along the length of the pipe sections. The wire rope slings are tightened and secured using clasps. The wire rope slings are then secured to a common lifting means such as a crane hook to enable the pipe sections to be lifted. Such a method suffers from several disadvantages. First there is a risk that if the sling is not sufficiently tightened, the pipe sections will slip therefrom. Second, there are recognised problems relating to the slings themselves. For example, the wire rope slings can easily become entangled, due to the random nature of their being secured in position about the pipes, which can be particularly inconvenient on, for example, an offshore platform.

Although the transportation frame method is the safer and more efficient method, this does have its limitations when used on smaller drilling rigs. As the current designs of transportation frames have a combined crossbeam and lifting upright 11 configuration, adequate deck space is required to allow for the removal of the lifting uprights. Moreover, the frames 10 can typically only be used to transport tubular goods such as oil pipes having the same diameter, especially between vertically neighbouring crossbeams.

The invention comprises a number of "V" profile interlocking crossbeams with lifting slings integrated to the bottom crossbeams. When loaded with tubulars, the crossbeams can then be clamped together using several clamping bolts that are threaded into the bottom crossbeam. The quantity of clamping bolts will vary depending on pipe size, configuration quantity. When clamped together, the complete cradle assembly can then be lifted to location using the integrated lifting slings.

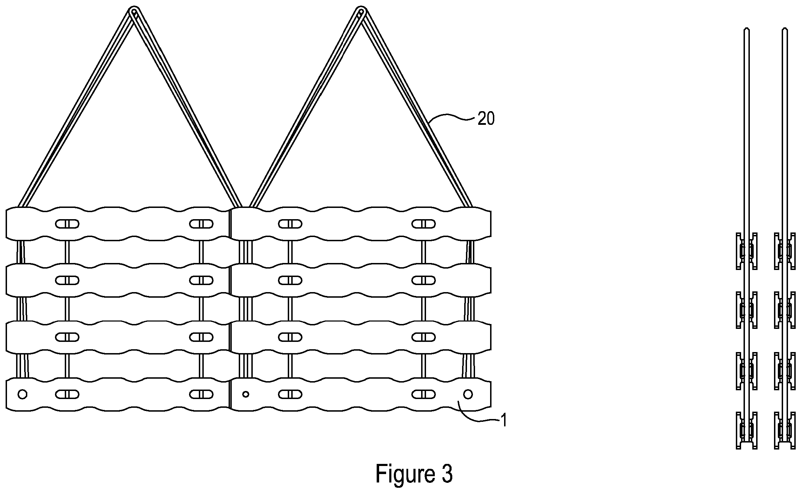

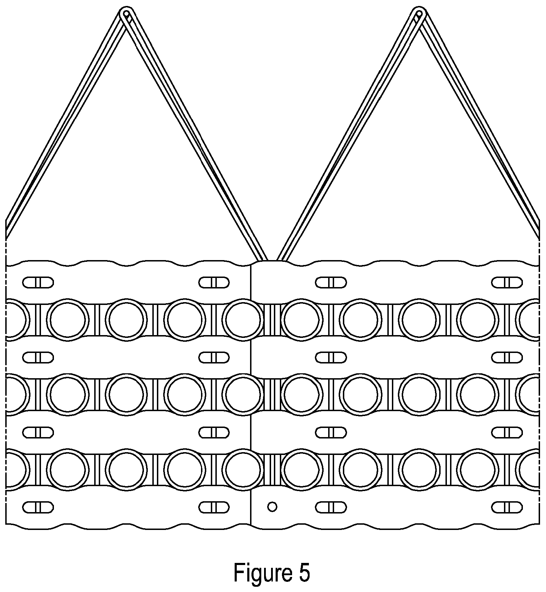

The present invention therefore seeks to address this problem as illustrated in Figure 3, 4 and 5. The invention enables the safe and efficient transport and storage of various diameter and quantities of pipe strings and assemblies, which may require protection against impact, and which require a more limited deck space compared to current methods. This is achieved firstly by utilizing an interlocking "V" profile crossbeam design with integrated lifting sling incorporated into each bottom crossbeam 1. The shape of the profile is able to be changed as described below, and to also provide on an individual crossbeam, if required, different profiles. This enables pipes of different diameters to be housed within a single cradle, increasing the flexibility of use of a cradle, and reducing the number of cradles or crossbeams which need to be stored.

Referring to Figures 3 - 5, these illustrate a cradle formation comprising two conjoined cradles 41, 42 joined together at neighbouring crossbeams. Although physical connections such as bolts and the like can be utilised to hold neighbouring crossbeams together, this is preferably achieved through the action of the slings about the outside of each crossbeam, along with the interlocking profiles of neighbouring crossbeams. Each crossbeam 43 has an upper profile and a lower profile comprising one or more recesses 5 having a 'V' profile to accommodate a pipe or the like. The individual crossbeams 43 are held together in horizontal alignment by means of the clamping bolts 3 which pass through apertures in each cross beam 43 and are securely coupled to the lowermost crossbeam by a threaded connection or the like. The threaded connection allows for torquing of the clamping bolts 3. The threaded connection is typically of a more wearable material such as a bronze material, than are the other components of the cradle, in particular the crossbeams. The crossbeams are preferably formed of a more lightweight material such as aluminium.

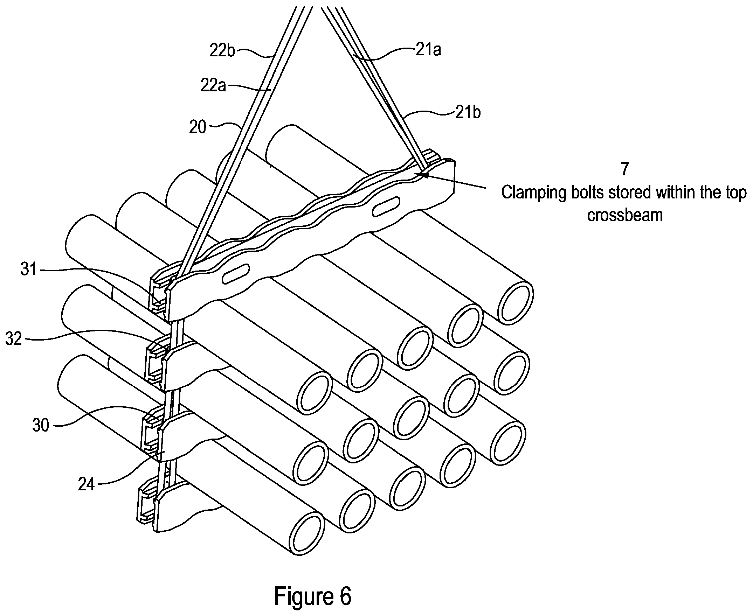

The lowermost crossbeam 44 also includes a hinge pin about which the lifting sling passes, and which is described in more detail below with respect to Figure 6. The top crossbeam will house the clamping bolts 3 during the removal process.

The interchangeability of the "V" profile 5 allows for a variation of pipe sizes and quantities to be used, using the same crossbeam. The use of composite inserts of different sizes allows the crossbeam to capture pipe diameters of 2 3/8" (6cm) and above utilizing the same crossbeam. The system also allows the safe and efficient storage and transportation of a single tool.

The interlocking profile 6 allows for each tubular transportation cradle to be placed directly against the adjacent cradle, eliminating the unnecessary use of deck space. The interlocking crossbeams are made from a variety of materials (depending on client specific requirements) ranging from, extruded aluminium, composite, carbon fibre or elastomer. In particular, a fibre formed of a High or Ultra High Modulus polyethylene fibre (High modulus polyethylene (HMPE) or Ultra-high Molecular weight polyethylene (UHMWPE)), such as that marketed under the Trade Name Dyneema has been found suitable. An example of a sling material which is suitable is that marketed under the Trade Name Extreema.

As multiple downhole tools and assemblies require protection against impact from other equipment, an optional impact covering can be used to protect the specific areas of the assemblies from impact.

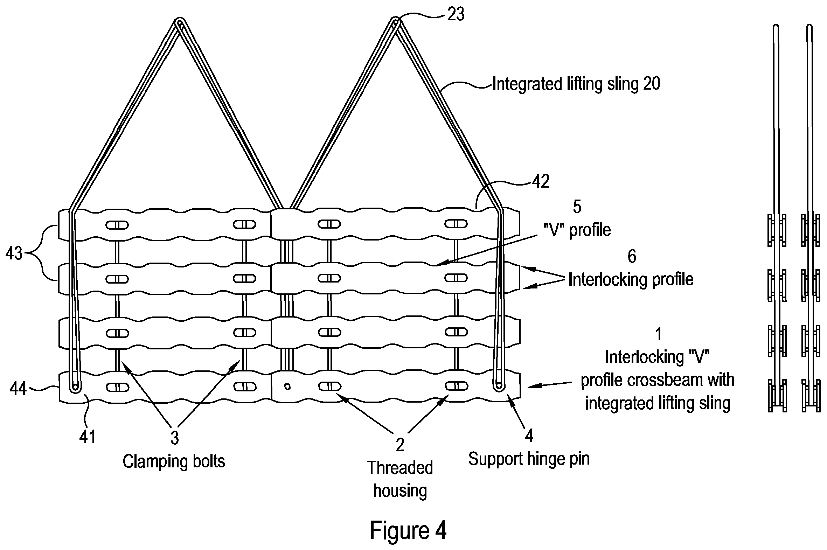

From Figure 6 it can be seen that a section of a sling 20 comprises 2 strands 21a, 21b. The strands 21a, 21b are linked at a first end 23 (see Figure 4) to corresponding strands 22a, 22b so the sling has the form of a closed loop. The loop is utilised to lift the cradle and pipe assembly. The strands 21a, 21b form a continuous loop and pass around the support hinge pin 4 to provide a lifting point for the cradle.

To ensure that the sling remains in position, the ends of the crossbeams 1 are profiled to define vertically orientated slots 30, housing the strands 21a, 21b. A slot 30 has a narrow section 31, which joins into an approximately circular aperture 32 which in use houses the strands 21a, 21b. Once the strands 21a, 21b have been passed into the aperture 32, the restricted size of the slot 30 hinders the strands 21a, 21b from being pulled out. Once transportation of the cradle and pipe assembly has been carried out, the loop can be decoupled from the lifting apparatus. The strands 21a, 21b remain then in position in relation to the cradle and there is a reduced risk of the strands 21a, 21b becoming entangled, lost or damaged. Optionally a removable closure means can be provided to releasably close the slot 30 to prevent the strands 21a, 21b from being unwittingly removed. Where a strand 21a, 21b engages a surface on a crossbeam 24 or elsewhere, then the strand 21a, 21b can have an outer wear sleeve to prevent weakening of the strand 21a, 21b by abrasion.

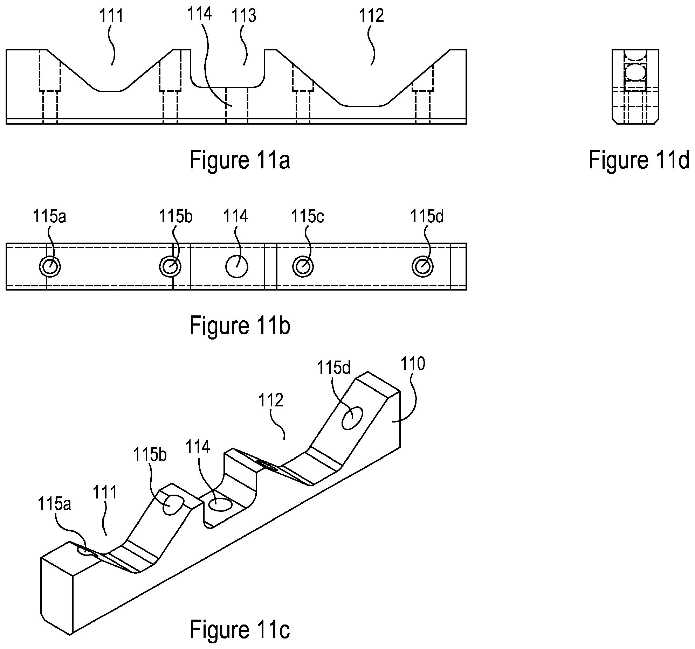

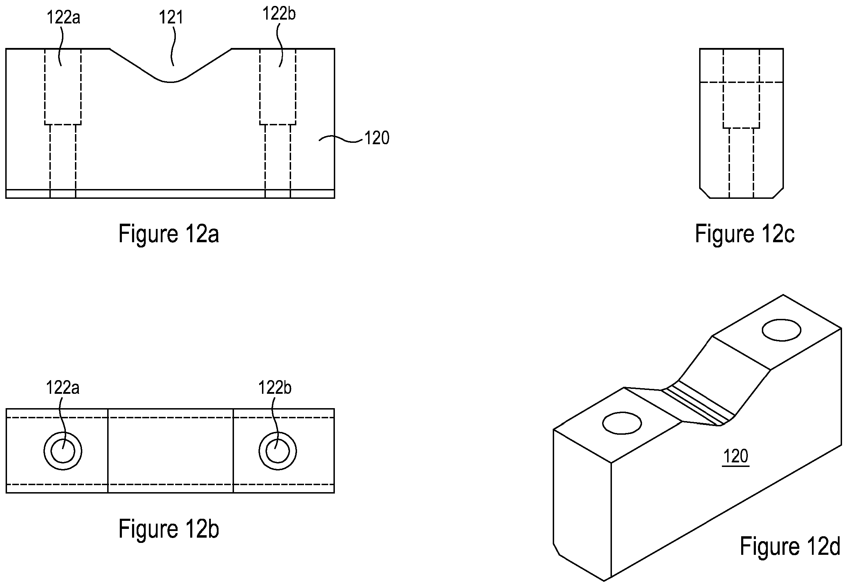

In order to enable different diameter pipes to be housed within the same cradle or between the same two crossbeams then one or more inserts as shown in Figure 11 and 12 can be utilised. An insert can be formed of a resilient material such as a rubber material or of a metal such as steel or aluminium having an upper resilient or rubber surface secured thereto. The rubber acts to minimise any damage to a pipe during movement of the cradle. The inserts are removably securable to a crossbeam, either onto the top of a crossbeam, the underside of a crossbeam or to both sides as required. The insert 110 as shown in Figures 11 is suitable for retaining pipes of 2 different diameters and has therefore recesses or channels 111, 112 of a corresponding width and depth and of V-shaped cross-section. It will be appreciated that the recess can be of other suitable cross-section such as semi-circular, semi-elliptical to suit the use. The central channel 113 has a through aperture 114 which allows the passage of a clamping bolt 3 there through. Further through apertures 115a - d allow bolts to be passed therethrough to secure the insert to a crossbeam. The insert 120 of Figure 12 has a smaller width recess 121 than those of the insert 110. In addition, the insert 120 is of greater height than the insert 110 which enables pipes supported by neighbouring inserts 110, 120 to be at different heights thus minimising the chance of their inter-engagement. Again, the insert 120 has 2 through apertures 122a, b enabling the insert 120 to be secured to a crossbeam. In Figure 12a, the partial lines illustrate the shape of the through apertures 122a, b within the insert 120.

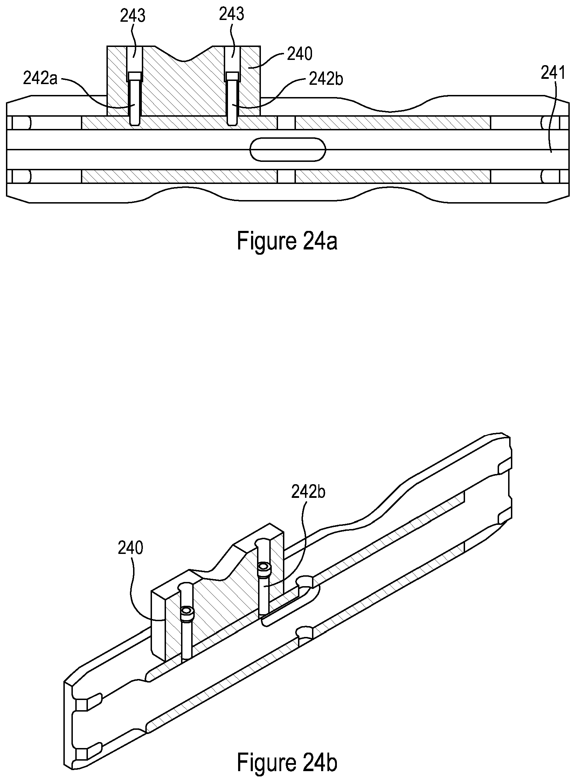

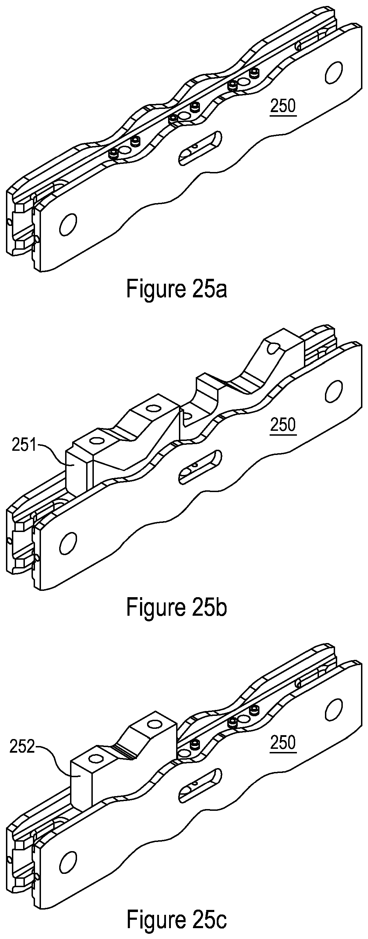

Figures 24 illustrate an insert 240 as secured to a crossbeam 241. The bolts 242a, 242b are housed within the through apertures 243 and secured by a screw-thread fitment to a corresponding screw-thread in the crossbeam 241. Figure 25a illustrates a crossbeam 250 in accordance with the invention. In Figure 25b, the crossbeam 250 is shown having an insert 251 as shown in Figures 11 secured thereto. In Figure 25c, an insert 252 in accordance with Figures 12 is secured to the crossbeam 250.

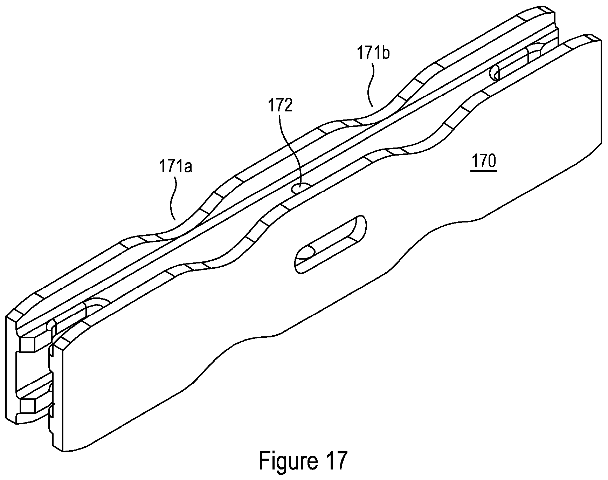

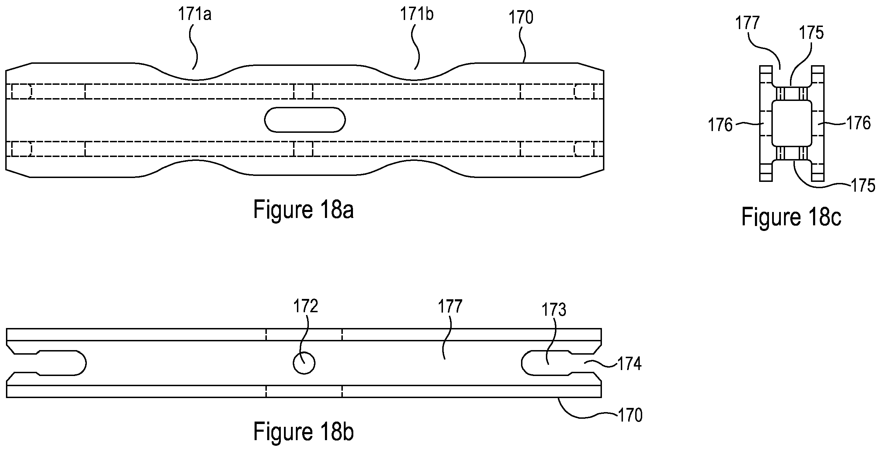

Figures 17 - 23 illustrate different configurations of crossbeam and a generalised construction thereof. In one embodiment shown in Figures 17 and 18, a crossbeam 170 is illustrated. The crossbeam of this embodiment is suitable for use as the topmost crossbeam in a cradle. As shown in Figure 17, the crossbeam is 170 is suitable for use in supporting two pipes of the same or similar diameter in the recesses 171a, 171b. The walls of the crossbeam 170 are preferably formed of aluminium or similar lightweight material to minimise the weight of the crossbeam 170. The crossbeam 170 has a single through aperture 172 to allow a clamping rod to be passed therethrough. At each end is a slot 173 having a narrow entrance channel 174 allowing a strand to pass into the slot 173. Two crosspieces 175 connect the walls 176 of the crossbeam 170 together. A further channel 177 can be used to store clamping rods.

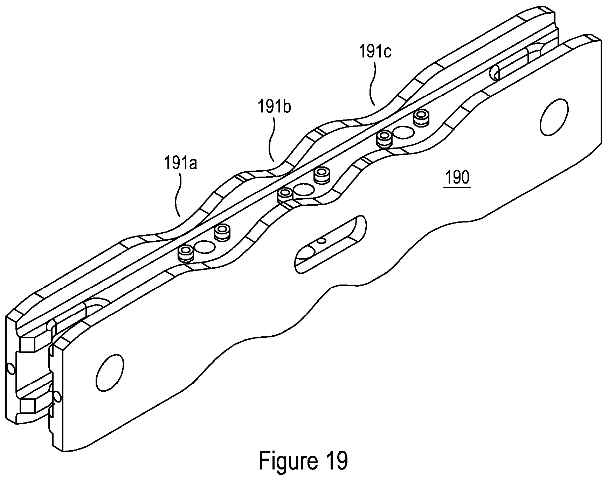

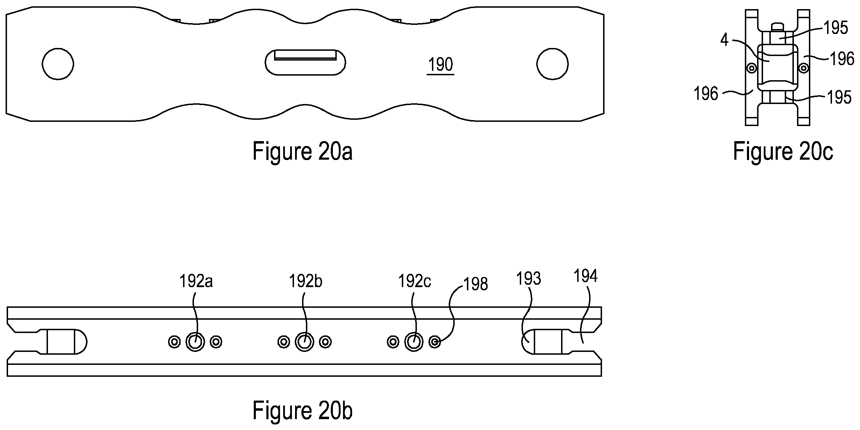

The embodiment of crossbeam 190 shown in Figures 19 and 20 has 3 channels 191a, b, c to support three pipes of the same or similar diameter in the channels 191a, 191b, 191c. The crossbeam 190 is suitable for use as one of the lowermost crossbeams of a cradle. The walls of the crossbeam 190 are preferably formed of aluminium or similar lightweight material to minimise the weight of the crossbeam 190. The crossbeam 190 has 3 through apertures 192 to allow clamping rods to be passed therethrough. At each end is a slot 193 having a narrow entrance channel 194 allowing a strand to pass into the slot 193. Two crosspieces 195 connect the walls 196 of the crossbeam 190 together. A hinge pin 4 acts to guide the strands of the sling and minimise wear. When it is required that an insert be secured to the crossbeam 190 in order to support a pipe of a different diameter to that supported by a channel 191, the crossbeam 190 includes threaded apertures 198 - shown in Figures 19 and 20 having bolts secured therein. An insert can thus be secured in position by these or other suitable bolts.

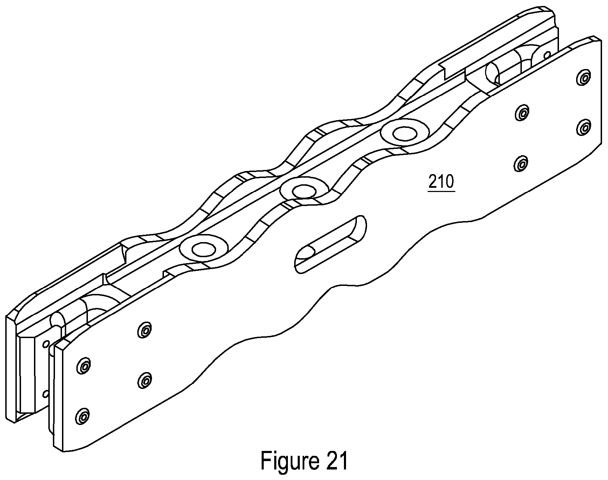

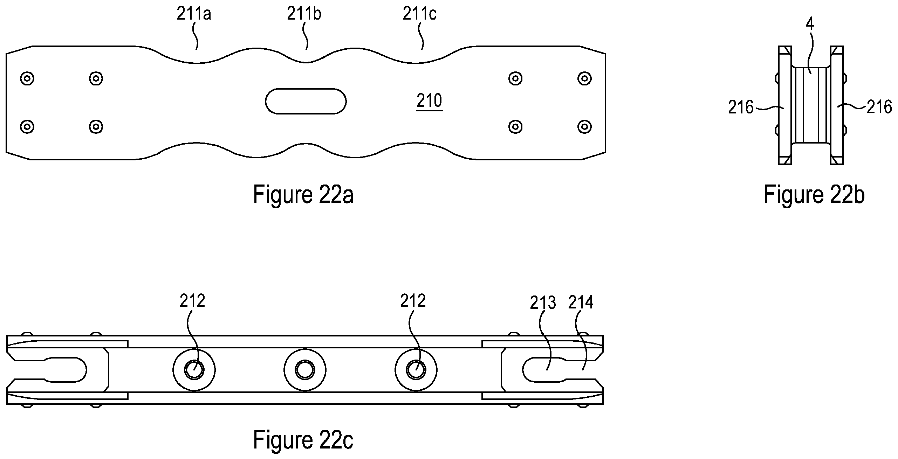

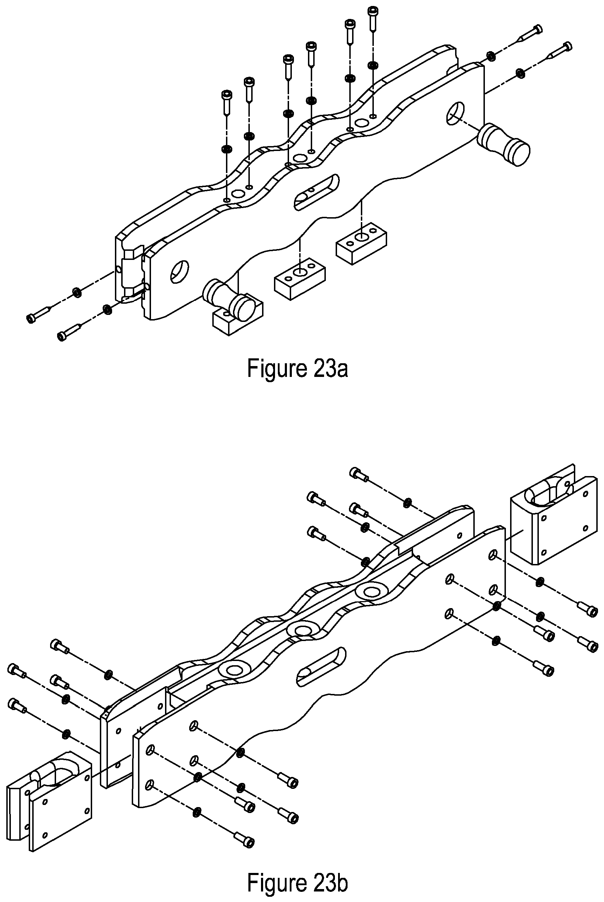

The embodiment of crossbeam 210 shown in Figures 21 and 22 has 3 channels 211a, b, c to support three pipes of the same or similar diameter in the channels 211a, 211b, 211c. The crossbeam 210 is suitable for use as the top crossbeam of a cradle. The walls of the crossbeam 210 are preferably formed of aluminium or similar lightweight material to minimise the weight of the crossbeam 210. The crossbeam 210 does not comprise throughapertures, but instead has threaded apertures 212 to receive and threadably couple with a clamping rod. At each end of the crossbeam 210 is a slot 213 having a narrow entrance channel 214 allowing a strand to pass into the slot 213. The slot includes a hinge pin 4 about which a strand passes. Figures 23 illustrate the structure of the crossbeam 210, and show more clearly the hinge pin 4.

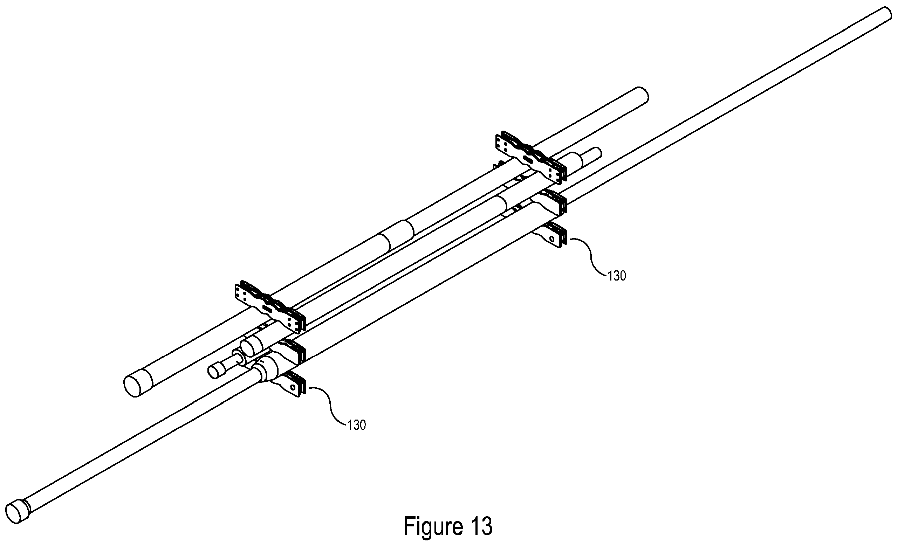

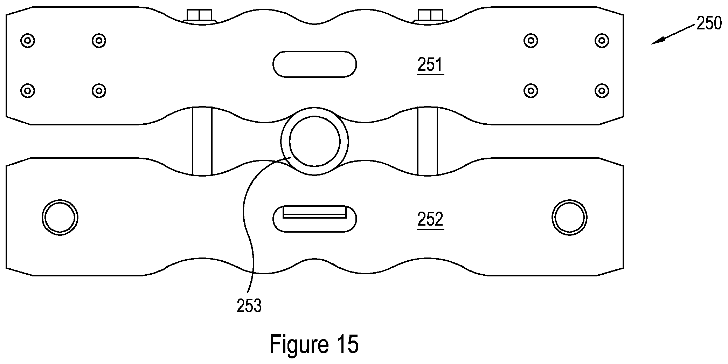

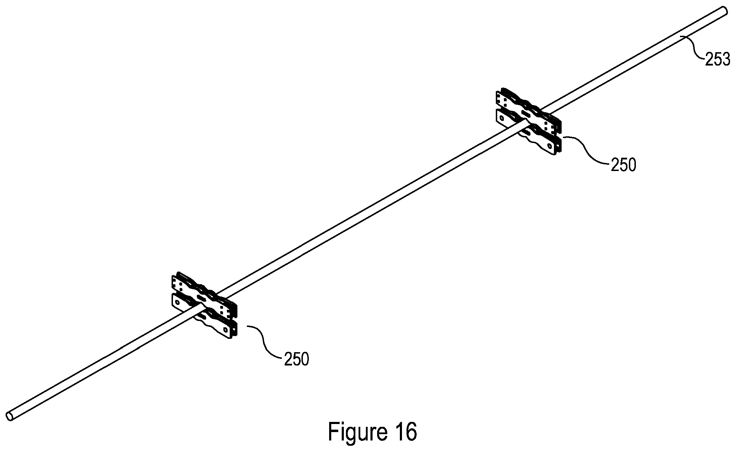

Figures 13, 15 and 16 illustrate the use of the abovementioned crossbeams to support pipes or similar tubular goods. In Figure 13, 2 cradles 130 support a variety of pipes of different diameters. In Figure 15, is shown a cradle 250 having 2 crossbeams 251, 252 for supporting a single pipe 253 for transport. Figure 16 is a perspective view showing 2 cradles 250 supporting said pipe 253.

The scope of protection of the current invention is defined by the appended claims.

## Claims

1. A cradle (41) adapted to carry tubular goods of different diameter simultaneously, the cradle comprising a plurality of parallel deployed crossbeams (43), each crossbeam (43) having a profiled end comprising a sling-receiving section to receive a sling (20), the sling-receiving section including a sling retention means (30) to retain the sling (20) within the sling-receiving section, each crossbeam having one or more recesses along one or both, and preferably both, of an upper surface and a lower surface of the crossbeam to receive and support a pipe, **characterised in that** the cradle includes
securing means to secure a removable insert (110, 120, 240) to an upper or lower surface, the insert having one or more recesses (111, 112, 121, 171a, 171b) to receive and support a pipe, enabling a cradle to be adapted to support pipes of different diameter, a sling secured to each end of the lowermost crossbeam of the cradle.

2. A cradle according to claim 1, wherein the crossbeams are held in alignment by a clamp bolt passing through each crossbeam and secured to the lowermost crossbeam.

3. A cradle according to claim 2, wherein the cradle comprises two or more clamp bolts (3).

4. A cradle according to claim 2 or claim 3, wherein the or each clamp bolt is secured to the lowermost crossbeam (44) by a threaded connection (2).

5. A cradle according to claim 4, wherein the threaded connection is formed of a hard material such as bronze.

6. A cradle according to any preceding claim, wherein the uppermost crossbeam includes a channel (177) along the upper surface to retain a clamp bolt when not in use.

7. A cradle according to any preceding claim, wherein a crossbeam is formed of one or more of extruded aluminium, composite, carbon fibre or elastomer.

8. A cradle according to claim 7, wherein a fibre is formed of a High or Ultra High Modulus polyethylene fibre (High modulus polyethylene (HMPE) or Ultra-high Molecular weight polyethylene (UHMWPE).

9. A cradle according to claim 7, wherein a crossbeam is formed of aluminium.

10. A cradle according to any preceding claim, wherein the sling comprises a plurality of strands.

11. A cradle according to any preceding claim, wherein the sling is in the form of a loop.

12. A cradle according to any preceding claim, wherein a slot includes a circular aperture to receive a sling.

13. A cradle according to any preceding claim, wherein the restraining means comprises a narrow aperture (32) linking the interior of the slot to the exterior of the cradle.

14. A cradle according to any preceding claim, wherein a removable insert has an upper and a lower surface, the upper surface including a recess to receive tubular goods such as a pipe.

15. A cradle according to claim 14, wherein the upper surface of an insert is formed of a resilient material such as a rubber.

16. A cradle according to claims 1 - 14, wherein the insert is formed of a resilient material.

17. A cradle according to any preceding claim, wherein an insert has a plurality of recesses in the upper surface of the insert.

18. A cradle according to claim 14, wherein at least two of the recesses are of different sizes to accommodate tubular goods of different diameters.

## Patentansprüche

1. Wiege (41), die dafür ausgelegt ist, Rohrgüter mit unterschiedlichem Durchmesser gleichzeitig zu tragen, wobei die Wiege eine Vielzahl von parallel angeordneten Querträgern (43) umfasst, wobei jeder Querträger (43) ein profiliertes Ende aufweist, das einen Schlingenaufnahmeabschnitt umfasst, um eine Schlinge (20) aufzunehmen, wobei der Schlingenaufnahmeabschnitt ein Schlingenrückhaltemittel (30) enthält, um die Schlinge (20) innerhalb des Schlingenaufnahmeabschnitts zu halten, wobei jeder Querträger eine oder mehrere Aussparungen entlang einer oder beiden, und vorzugsweise beiden, einer oberen Oberfläche und einer unteren Oberfläche des Querträgers aufweist, um ein Rohr aufzunehmen und zu stützen, **dadurch gekennzeichnet, dass** die Wiege Befestigungsmittel zum Befestigen eines entfernbaren Einsatzes (110, 120, 240) an einer oberen oder unteren Fläche umfasst, wobei der Einsatz eine oder mehrere Aussparungen (111, 112, 121, 171a, 171b) zum Aufnehmen und Stützen eines Rohrs aufweist, wodurch eine Wiege zum Stützen von Rohren mit unterschiedlichem Durchmesser angepasst werden kann, wobei eine Schlinge an jedem Ende des untersten Querträgers der Wiege befestigt ist.

2. Wiege nach Anspruch 1, wobei die Querträger durch einen Klemmbolzen, der durch jeden Querträger hindurchgeht und am untersten Querträger befestigt ist, in Ausrichtung gehalten werden.

3. Wiege nach Anspruch 2, wobei die Wiege zwei oder mehr Klemmbolzen (3) umfasst.

4. Wiege nach Anspruch 2 oder 3, wobei der oder jeder Klemmbolzen durch eine Gewindeverbindung (2) am untersten Querträger (44) befestigt ist.

5. Wiege nach Anspruch 4, wobei die Gewindeverbindung aus einem harten Material, wie z. B. Bronze, gebildet ist.

6. Wiege nach einem der vorhergehenden Ansprüche, wobei der oberste Querträger einen Kanal (177) entlang der oberen Fläche umfasst, um einen Klemmbolzen zu halten, wenn er nicht in Gebrauch ist.

7. Wiege nach einem der vorhergehenden Ansprüche, wobei ein Querträger aus einem oder mehreren der folgenden Werkstoffe gebildet ist: stranggepresstes Aluminium, Verbundwerkstoff, Kohlenstofffaser oder Elastomer.

8. Wiege nach Anspruch 7, wobei eine Faser aus einer Polyethylenfaser mit hohem oder ultrahohem Modulus (Hochmodul-Polyethylen (HMPE)) oder Polyethylen mit ultrahohem Molekulargewicht (UHMWPE) besteht.

9. Wiege nach Anspruch 7, wobei ein Querträger aus Aluminium gebildet ist.

10. Wiege nach einem der vorhergehenden Ansprüche, wobei die Schlinge eine Vielzahl von Litzen umfasst.

11. Wiege nach einem der vorhergehenden Ansprüche, wobei die Schlinge die Form einer Schlaufe hat.

12. Wiege nach einem der vorhergehenden Ansprüche, wobei ein Schlitz eine kreisförmige Öffnung zur Aufnahme einer Schlinge aufweist.

13. Wiege nach einem der vorhergehenden Ansprüche, wobei das Rückhaltemittel eine schmale Öffnung (32) umfasst, die das Innere des Schlitzes mit der Außenseite der Wiege verbindet.

14. Wiege nach einem der vorhergehenden Ansprüche, wobei ein herausnehmbarer Einsatz eine obere und eine untere Fläche aufweist, wobei die obere Fläche eine Aussparung zur Aufnahme von Rohrgütern, wie z. B. einem Rohr, enthält.

15. Wiege nach Anspruch 14, wobei die obere Fläche eines Einsatzes aus einem elastischen Material, wie z. B. Gummi, besteht.

16. Wiege nach einem der Ansprüche 1 bis 14, wobei der Einsatz aus einem elastischen Material gebildet ist.

17. Wiege nach einem der vorhergehenden Ansprüche, wobei ein Einsatz eine Vielzahl von Aussparungen in der oberen Fläche des Einsatzes aufweist.

18. Wiege nach Anspruch 14, wobei mindestens zwei der Aussparungen unterschiedliche Größen aufweisen, um Rohrgüter mit unterschiedlichen Durchmessern aufzunehmen.

## Revendications

1. Berceau (41) adapté pour transporter simultanément des articles tubulaires de différents diamètres, le berceau comprenant plusieurs traverses (43) déployées en parallèle, chaque traverse (43) ayant une extrémité profilée comprenant une section de réception d'élingue destinée à recevoir une élingue (20), la section de réception de l'élingue comprenant un moyen de rétention de l'élingue (30) pour retenir l'élingue (20) dans la section de réception de l'élingue, chaque traverse ayant un ou plusieurs évidements le long de l'une ou des deux, et de préférence des deux, d'une surface supérieure et d'une surface inférieure de la traverse pour recevoir et supporter un tuyau, **caractérisé en ce que** le berceau comprend un moyen de fixation pour retenir un insert amovible (110, 120, 240) à une surface supérieure ou inférieure, l'insert ayant un ou plusieurs évidements (111, 112, 121, 171a, 171b) pour recevoir et supporter un tuyau, ce qui permet à un berceau d'être adapté pour supporter des tuyaux de différents diamètres, une élingue étant fixée à chaque extrémité de la traverse la plus basse du berceau.

2. Berceau selon la revendication 1, dans lequel les traverses sont maintenues dans l'alignement par un boulon de serrage traversant chaque traverse et fixé à la traverse la plus basse.

3. Berceau selon la revendication 2, dans lequel le berceau comprend deux ou plusieurs boulons de serrage (3).

4. Berceau selon la revendication 2 ou la revendication 3, dans lequel le ou chaque boulon de serrage est fixé à la traverse la plus basse (44) par un raccord fileté (2).

5. Berceau selon la revendication 4, dans lequel le raccord fileté est formé d'un matériau dur tel que le bronze.

6. Berceau selon l'une quelconque des revendications précédentes, dans lequel la traverse supérieure comprend un canal (177) le long de la surface supérieure pour retenir un boulon de serrage lorsqu'il n'est pas utilisé.

7. Berceau selon toute revendication précédente, dans lequel une traverse est formée d'un ou plusieurs éléments parmi l'aluminium extrudé, le composite, la fibre de carbone ou l'élastomère.

8. Berceau selon la revendication 7, dans lequel une fibre est formée d'une fibre de polyéthylène à module élevé ou ultra élevé (polyéthylène à module élevé (HMPE)) ou polyéthylène à poids moléculaire ultra élevé (UHMWPE).

9. Berceau selon la revendication 7, dans lequel une traverse est formée d'aluminium.

10. Berceau selon l'une quelconque des revendications précédentes, dans lequel l'élingue comprend plusieurs brins.

11. Berceau selon l'une quelconque des revendications précédentes, dans lequel l'élingue se présente sous la forme d'une boucle.

12. Berceau selon toute revendication précédente, dans lequel une fente comprend une ouverture circulaire pour recevoir une élingue.

13. Berceau selon toute revendication précédente, dans lequel le moyen de retenue comprend une ouverture étroite (32) reliant l'intérieur de la fente à l'extérieur du berceau.

14. Berceau selon l'une quelconque des revendications précédentes, dans lequel un insert amovible présente une surface supérieure et une surface inférieure, la surface supérieure comprenant un évidement destiné à recevoir des articles tubulaires tels qu'un tuyau.

15. Berceau selon la revendication 14, dans lequel la surface supérieure d'un insert est formée d'un matériau élastique tel que le caoutchouc.

16. Berceau selon les revendications 1 à 14, dans lequel l'insert est formé d'un matériau élastique.

17. Berceau selon l'une quelconque des revendications précédentes, dans lequel un insert présente plusieurs évidements dans la surface supérieure de l'insert.

18. Berceau selon la revendication 14, dans lequel au moins deux des évidements sont de tailles différentes pour accueillir des articles tubulaires de diamètres différents.
